# EUROPÄISCHE PATENTANMELDUNG

(11) **EP 0 711 617 A1**
(43) Veröffentlichungstag der Anmeldung: **15.05.1996**
(21) Anmeldenummer: 95117392.1
(22) Anmeldetag: 04.11.1995
(51) Int. Cl.: B23B 5/32

(54) **Unterflur-Radsatzdrehmaschine zum Reprofilieren der Räder von Eisenbahn-Radsätzen**

(30) Priorität: 12.11.1994 DE 9418166 U
(71) Anmelder: Hoesch Maschinenfabrik Deutschland GmbH, D-44145 Dortmund (DE)
(72) Erfinder: Brinkmann, Dirk, Dipl.-Ing., D-44532 Lünen (DE); Leitloff, Uwe, Dipl.-Ing., D-30974 Wenningsen (DE); Staske, Matthias, Dipl.-Ing., D-44803 Bochum (DE)

(57) **Zusammenfassung**

Bei einer Unterflur-Radsatzdrehmaschine zum Reprofilieren der Räder von Eisenbahn-Radsätzen, enthaltend vier angetriebene Reibrollen zur Erzeugung der Schnittbewegung, zwei Drehsupporte zur gleichzeitigen Reprofilierung zweier Räder eines Radsatzes, zwei Achslagerstützvorrichtungen und zwei Niederhaltevorrichtungen, wobei die Achslagerstützvorrichtungen je eine höhenverstellbare Pratze und die Niederhaltevorrichtungen je eine um eine senkrechte Schwenkachse schwenkbare sowie vertikal verstellbare Traverse mit einer in ihr geführten Pinole aufweisen und wobei jede Pinole wahlweise der Aufnahme eines Niederhalters oder einer mitlaufenden Körnerspitze dient, werden bei der Reprofilierung der Räder von Radsätzen im zentrierten Zustand der Achswelle starke Auslenkungen der Niederhaltevorrichtungen dadurch vermieden, daß in der Pratze (39, 40) einer jeden Achslagerstützvorrichtung (10, 11) eine Pinolenführung (79, 80) angeordnet ist.

## Beschreibung

Die Erfindung bezieht sich auf eine Unterflur-Radsatzdrehmaschine zum Reprofilieren der Räder von Eisenbahn-Radsätzen, enthaltend vier angetriebene Reibrollen zur Erzeugung der Schnittbewegung, zwei Drehsupporte zur gleichzeitigen Reprofilierung zweier Räder eines Radsatzes, zwei Achslagerstützvorrichtungen und zwei Niederhaltevorrichtungen, wobei die Achslagerstützvorrichtungen je eine höhenverstellbare Pratze und die Niederhaltevorrichtungen je eine um eine senkrechte Schwenkachse schwenkbare sowie vertikal verstellbare Traverse mit einer in ihr geführten Pinole aufweisen und wobei jede Pinole wahlweise der Aufnahme eines Niederhalters oder einer mitlaufenden Körnerspitze dient.

Eine derartige Unterflur-Radsatzdrehmaschine ist durch die deutsche Offenlegungsschrift 29 37 751 A1 bekannt.

Auf einer solchen Unterflur-Radsatzdrehmaschine können die Räder von ein- und ausgebauten Radsätzen im zentrierten Zustand der äußeren Achslagerkästen oder der Achswelle mit großen Schnittkräften reprofiliert werden.

Bei der Reprofilierung der Räder von Radsätzen im zentrierten Zustand der Achswelle sind jedoch die Niederhaltevorrichtungen mehr oder weniger starken Auslenkungen unterworfen, die sich nachteilig auf die Bearbeitungsgenauigkeit auswirken. Diese Auslenkungen der Niederhaltevorrichtungen sind bei kurzen Achswellenlängen besonders groß.

Hiervon ausgehend liegt der Erfindung die Aufgabe zugrunde, eine Unterflur-Radsatzdrehmaschine der eingangs genannten Art so auszubilden, daß bei der Reprofilierung der Räder von Radsätzen im zentrierten Zustand der Achswelle starke Auslenkungen der Niederhaltevorrichtungen vermieden werden können.

Erfindungsgemäß wird diese Aufgabe dadurch gelöst, daß in der Pratze einer jeden Achslagerstützvorrichtung eine Pinolenführung angeordnet ist.

Ferner ist die Pratze einer jeden Achslagerstützvorrichtung um eine senkrechte Achse drehbar.

Die Mitte einer jeden Pinolenführung weist einen Abstand zu der senkrechten Achse auf.

Vorzugsweise ist die Pratze einer jeden Achslagerstützvorrichtung mit einer Pinolenklemmvorrichtung ausgeführt.

Im folgenden wird die Erfindung anhand einer Zeichnung, in der ein Ausführungsbeispiel schematisch dargestellt ist, näher beschrieben.

Es zeigt
- Fig. 1: eine Unterflur-Radsatzdrehmaschine mit zwei mitlaufenden Körnerspitzen im Grundriß,
- Fig. 2: die Unterflur-Radsatzdrehmaschine mit zwei mitlaufenden Körnerspitzen und einem in einem Schienenfahrzeug eingebauten Radsatz bei zentrierter Achswelle im Längsschnitt,
- Fig. 3: die Unterflur-Radsatzdrehmaschine mit zwei mitlaufenden Körnerspitzen und einem aus einem Schienenfahrzeug ausgebauten Radsatz bei zentrierter Achswelle im Längsschnitt,
- Fig. 4: die Unterflur-Radsatzdrehmaschine mit Zwei Niederhaltern und einem in einem Schienenfahrzeug eingebauten Radsatz bei zentrierten äußeren Achslagerkästen im Längsschnitt.

Eine Unterflur-Radsatzdrehmaschine 1 hat zwei symmetrisch zu der Maschinenmitte 2 angeordnete Maschineneinheiten 3, 4, die fest mit einem Fundament 5 verbunden sind.

Jede Maschineneinheit 3, 4 enthält einen Maschinenständer 6, 7, einen Drehsupport 8, 9, eine Achslagerstützvorrichtung 10, 11, eine Niederhaltevorrichtung 12, 13 und zwei einzeln schwenkbar gelagerte Reibrollenantriebe 14, 15, 16, 17.

Jeder Drehsupport 8, 9 wird von zwei Motoren (nicht dargestellt) angetrieben, von denen der eine die Längsvorschubbewegung (Doppelpfeil 18) und der andere die Planvorschubbewegung (Doppelpfeil 19) erzeugt.

Auf jedem Drehsupport 8, 9 ist ein Drehwerkzeug 20, 21 zum Reprofilieren je eines Rades 22, 23, 24, 25, 26, 27 eines Radsatzes 28, 29, 30 befestigt.

Die für die Radreprofilierung erforderliche Schnittbewegung erzeugen die Reibrollenantriebe 14 bis 17, die jeweils einen Schwenkantrieb 31, 32, 33, 34 besitzen.

Die Schwenkachsen der Reibrollenantriebe 14 bis 17 sind mit 35, 36, 37, 38 bezeichnet.

Die Achslagerstützvorrichtungen 10, 11 enthalten je eine höhenverstellbare Pratze 39, 40, eine Kolbenzylindereinheit 41, 42 und eine Blockiervorrichtung 43, 44.

Jede Niederhaltevorrichtung 12, 13 ist ausgeführt mit einer senkrecht angeordneten Kolbenzylindereinheit 45, 46, einer Blockiervorrichtung 47, 48, einer Schwenklagerung 49, 50 und einer um eine senkrechte Schwenkachse 51, 52 schwenkbare Traverse 53, 54.

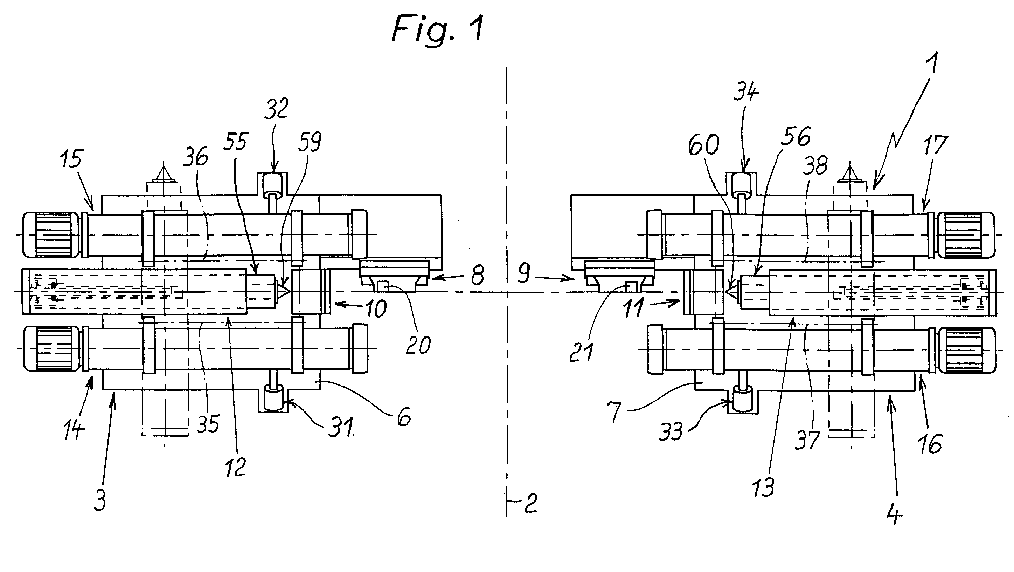

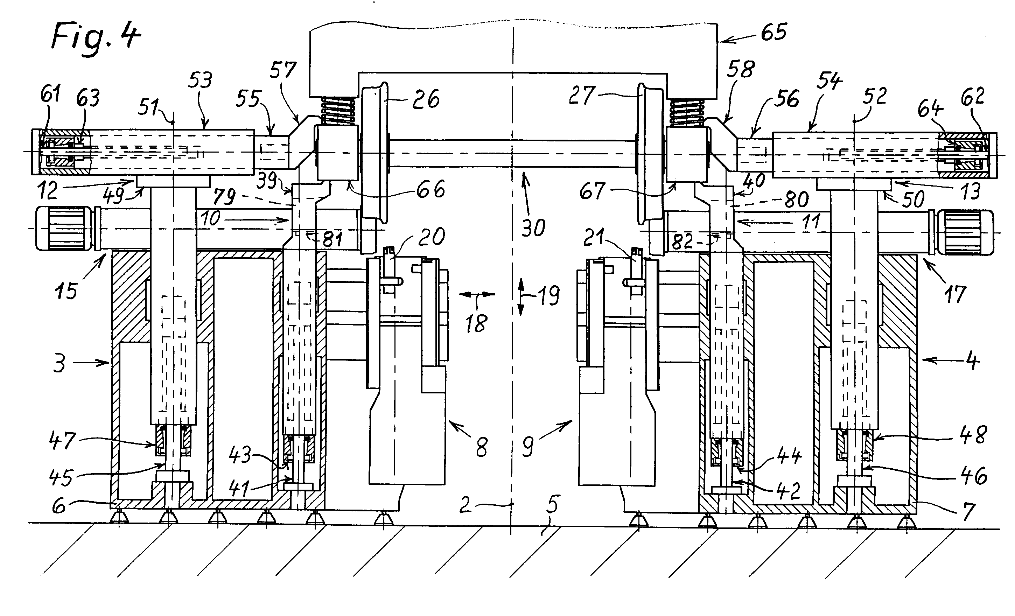

Jede Traverse 53, 54 hält eine waagerecht verschiebbare Pinole 55, 56, die wahlweise der Aufnahme eines Niederhalters 57, 58 (Fig. 4) oder einer mitlaufenden Körnerspitze 59, 60 (Fig. 1 bis 3) dient.

Die Verschiebebewegung einer jeden Pinole 55, 56 wird erzeugt von einer Kolbenzylindereinheit 61, 62, zu der eine Blockiervorrichtung 63, 64 gehört.

Nach Fig. 4 wird der in einem Schienenfahrzeug 65 eingebaute Radsatz 30 in der Unterflur-Radsatzdrehmaschine 1 gehalten durch Zentrierung der äußeren Achslagerkästen 66, 67 mit Hilfe der Pratzen 39, 40 und der Niederhalter 57, 58.

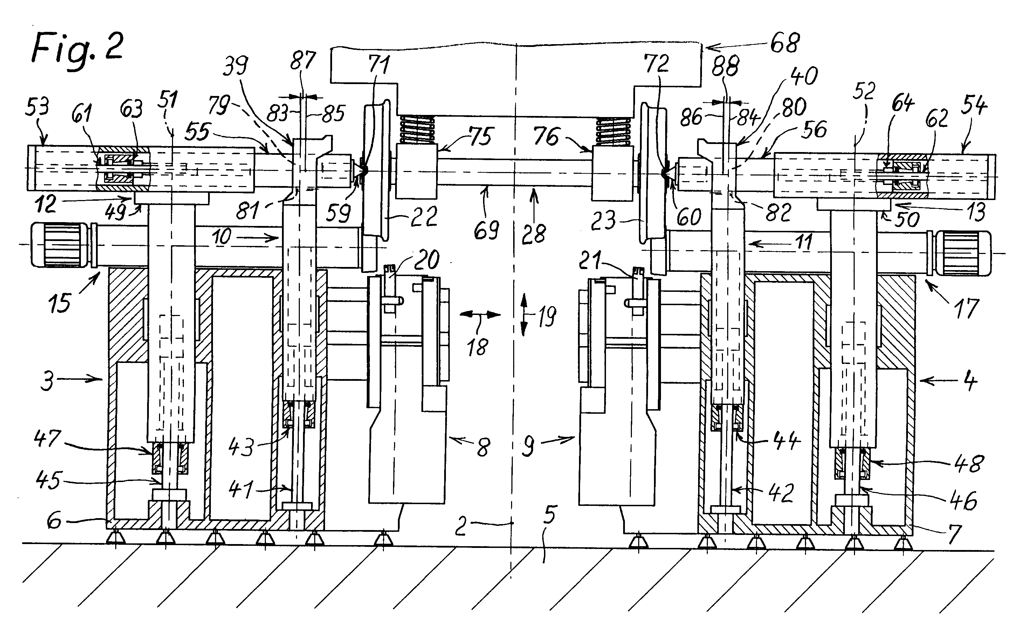

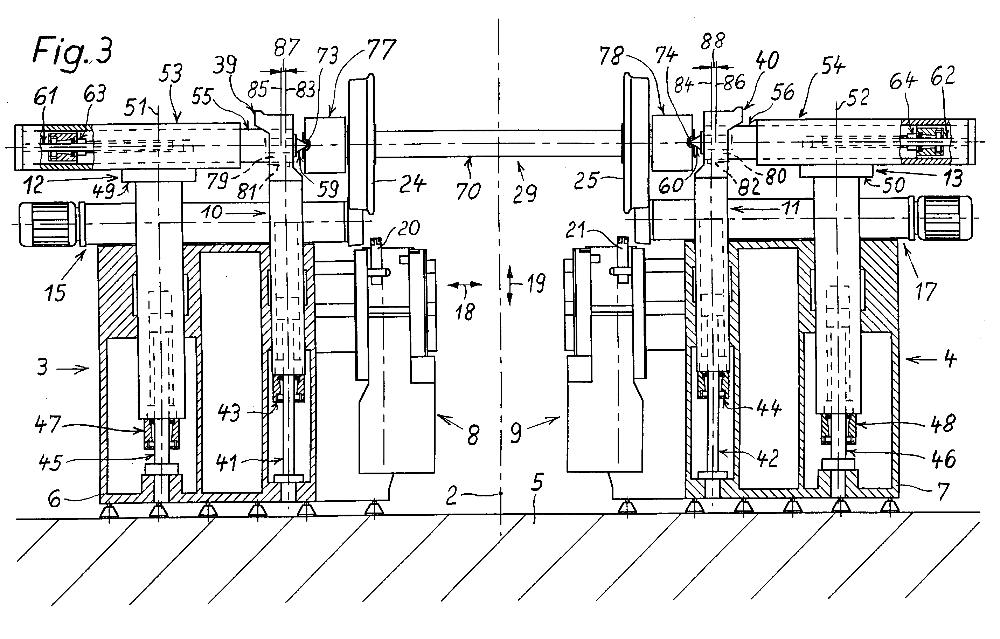

Im Gegensatz hierzu werden der in einem Schienenfahrzeug 68 eingebaute Radsatz 28 und der aus einem Schienenfahrzeug (nicht dargestellt) ausgebaute Radsatz 29 in der Unterflur-Radsatzdrehmaschine 1 gehalten durch Zentrierung der Achswellen 69, 70 mit Hilfe der mitlaufenden Körnerspitzen 59, 60 (Fig. 2 und 3).

Bei der Zentrierung der Achswellen 69, 70 drücken die Körnerspitzen 59, 60 jeweils gegen zwei Zentrierbohrungen 71, 72, 73, 74.

Die Achswelle 69 des in dem Schienenfahrzeug 68 eingebauten Radsatzes 28 ist im Vergleich zu der Achswelle 70 des ausgebauten Radsatzes 29 verhältnismäßig kurz, da einerseits die Achslagerkästen 75, 76 zwischen den Rädern 22, 23 und andererseits die Achslagerkästen 77, 78 außerhalb der Räder 24, 25 angeordnet sind.

Um eine starke Auslenkung der Niederhaltevorrichtungen 12, 13 während der Radreprofilierung der Radsätze 28, 29 zu vermeiden, ist in den Pratzen 39, 40 der Achslagerstützvorrichtungen 10, 11 je eine Pinolenführung 79, 80 angeordnet.

Jede Pratze 39, 40 ist mit einer Pinolenklemmung 81, 82 ausgeführt.

Ferner ist jede Pratze 39, 40 um je eine senkrechte Achse 83, 84 drehbar.

Die Mitte 85, 86 einer jeden Pinolenführung 79, 80 weist einen Abstand 87, 88 zu der senkrechten Achse 83, 84 auf.

Hierdurch werden für die Pinolen 55, 56 je zwei Haltepositionen geschaffen, s. Fig. 2 und 3.

## Patentansprüche

1. Unterflur-Radsatzdrehmaschine zum Reprofilieren der Räder von Eisenbahn-Radsätzen, enthaltend vier angetriebene Reibrollen zur Erzeugung der Schnittbewegung, zwei Drehsupporte zur gleichzeitigen Reprofilierung zweier Räder eines Radsatzes, zwei Achslagerstützvorrichtungen und zwei Niederhaltevorrichtungen, wobei die Achslagerstützvorrichtungen je eine höhenverstellbare Pratze und die Niederhaltevorrichtungen je eine um eine senkrechte Schwenkachse schwenkbare sowie vertikal verstellbare Traverse mit einer in ihr geführten Pinole aufweisen und wobei jede Pinole wahlweise der Aufnahme eines Niederhalters oder einer mitlaufenden Körnerspitze dient, dadurch gekennzeichnet, daß in der Pratze (39, 40) einer jeden Achslagerstützvorrichtung (10, 11) eine Pinolenführung (79, 80) angeordnet ist.

2. Unterflur-Radsatzdrehmaschine nach Anspruch 1, dadurch gekennzeichnet, daß die Pratze (39, 40) einer jeden Achslagerstützvorrichtung (10, 11) um eine senkrechte Achse (83, 84) drehbar ist.

3. Unterflur-Radsatzdrehmaschine nach den Ansprüchen 1 und 2, dadurch gekennzeichnet, daß die Mitte (85, 86) einer jeden Pinolenführung (79, 80) einen Abstand (87, 88) zu der senkrechten Achse (83, 84) aufweist.

4. Unterflur-Radsatzdrehmaschine nach Anspruch 1, dadurch gekennzeichnet, daß die Pratze (39, 40) einer jeden Achslagerstützvorrichtung (10, 11) mit einer Pinolenklemmvorrichtung (81, 82) ausgeführt ist.
